# EUROPÄISCHE PATENTSCHRIFT

(11) **EP 2 817 923 B1**
(45) Veröffentlichungstag und Bekanntmachung des Hinweises auf die Patenterteilung: **20.01.2021**
(21) Anmeldenummer: 13706480.4
(22) Anmeldetag: 20.02.2013
(51) Int. Cl.: H04L 12/437

(54) **RECHNERNETZWERK MIT EINER RINGFÖRMIGEN BUSVERBINDUNG**
COMPUTER NETWORK WITH A RING BUS CONNECTION
RÉSEAU DE CALCULATEURS AVEC UN BUS DE LIAISON DE FORME ANNULAIRE

(30) Priorität: 24.02.2012 DE 102012003515
(43) Veröffentlichungstag der Anmeldung: 31.12.2014
(73) Patentinhaber: Rheinmetall Landsysteme GmbH, 29345 Unterlüß (DE)
(72) Erfinder: BAUCHROWITZ, Stefan, 24582 Wattenbek (DE); IGELMANN, Gerd, 24229 Schwedeneck (DE)
(74) Vertreter: Dietrich, Barbara
(86) Internationale Anmeldenummer: PCT/EP2013/053392
(87) Internationale Veröffentlichungsnummer: WO 2013/124328

(56) Entgegenhaltungen:
- EP-A2- 0 895 899
- WO-A1-2004/071024
- US-A1- 2005 207 348
- US-A1- 2010 188 972

## Beschreibung

Die Erfindung betrifft ein Rechnernetzwerk, bei dessen bestimmungsgemäßen (regulärem) Betrieb die einzelnen Netzwerkteilnehmer jeweils über eine Busanschlusslogik mit einer ringförmigen Busverbindung verbunden sind, wobei ein Bussegment der Busverbindung offen bleibt und die beiden offenen Enden mit Abschlusswiderständen abgeschlossen sind, sodass die Busverbindung eine Strang-Topologie (auch als Bus- oder physikalische Ring-Topologie bezeichnet) aufweist. Die Busanschlusslogiken sind in Kombination mit der jeweils zugehörigen Kontrolllogik des Rechnernetzwerkes jeweils derart aufgebaut, dass bei Registrierung des Ausfalls der Kommunikation durch eine Kontrolllogik die Busverbindung zu einer Ring-Topologie aus Punkt-zu-Punkt-Verbindungen zusammengeschaltet wird. Nach Ermittlung des schadhaften Bussegmentes wird die reguläre Busverbindung wieder hergestellt, wobei die Busverbindung im Bereich des schadhaften Bussegmentes offen bleibt. Die Erfindung bezieht sich ferner auf eine Busanschlusslogik zum Anschluss eines Netzwerkteilnehmers an die Busverbindung des Rechnernetzwerkes sowie auf ein Verfahren zum Betrieb des Rechnernetzwerkes.

Ein Rechnernetzwerk der vorstehend erwähnten Art ist beispielsweise aus der DE 197 33 760 C2 bekannt. Dabei kann es sich bei der Busverbindung um ein serielles Bussystem, etwa einen CAN-Bus (Controller Area Network), und bei den Netzwerkteilnehmern um Ein/Ausgabeeinheiten sowie um Sensoren und/oder Aktoren handeln, welche beispielsweise innerhalb eines Fahrzeuges angeordnet sind. Die Busanschlusslogik verfügt hierbei über eine einfache Busschnittstelle.

Die US 2010/0246408 A1 beschreibt ein Kommunikationssystem sowie ein Verfahren zum Verwalten des Kommunikationssystems, wobei die Kommunikation zwischen Knoten erfolgt, die durch eine Übertragungsleitung miteinander verbunden sind. Jeder Knoten überträgt Daten und empfängt Informationen über die Übertragungsleitung. Derartige Kommunikationssysteme mit miteinander verbundenen Knoten können in verschiedenen Topologien organisiert werden wie Bus-, Ring-, Stern- oder Baumleitung. Das hier beschriebene Kommunikationssystem ist als Ring-Bus-Leitung konzipiert.

Die Strang-Topologie besitzt den Vorteil, dass bei einem Ausfall eines Netzwerkteilnehmers die Verbindung zwischen den verbleibenden Netzteilnehmern nicht gestört wird. Reine Strang-Topologien besitzen aber keine Möglichkeit, auf eine fehlerhafte Verbindungsleitung zu reagieren und selbständig die Konfiguration der Verbindungen zu verändern. Es sind aber Netzarchitekturen bekannt, die über die Möglichkeit verfügen, die Konfiguration der Verbindungen bzw. der Bus-Anschaltung selbständig zu verändern, um so fehlerhafte Verbindungen zu isolieren und den Betrieb mit einer geänderten Strang-Topologie fortzusetzen.

Die US 6,088,141 A1 offenbart ein selbstheilendes Netzwerk, insbesondere ein Kommunikationsnetzwerk mit mindestens drei Knoten, die durch Übertragungswege den Netzwerkverkehr zu und von den Knoten organisiert. Die Übertragungsstrecken werden hierbei in einen Arbeitsring und einen Schutzring unterteilt. Der Übertragungsverkehr im Arbeitsring und im Schutzring ist in entgegengesetzter Richtung übertragbar. Ein Knoten ist in der Lage, Fehler in den umliegenden Übertragungsstrecken oder Knoten zu erkennen. Bei Erkenne eines Fehlers wird der fehlerhafte Knoten von einem aktiven Betriebszustand in eine Schutzzustand überführt, geheilt und automatisch wieder in den Betriebszustand zurück gebracht.

Die US 201010188972 A1 offenbart ein Netzwerk in Ringtopologie, wobei bei Auftreten eines Fehlers im Netzwerk der Ring aufgetrennt wird und in Strangtopologie weiterbetrieben wird. Dazu wird der fehlerhafte Teilnehmer im Netzwerk erkannt und aus dem Ring herausgetrennt.

Alle bekannten Architekturen dieser Art besitzen den Nachteil, dass unter anderem beispielsweise ein Kabelfehler schwer zu orten ist. Es ist daher in der Regel erforderlich, in jedem Netzwerkteilnehmer die Position der anderen an der Busverbindung angeschlossenen Netzwerkteilnehmer zu hinterlegen. Außerdem ist im Falle eines Kurzschlusses der Busleitungen aufgrund der fehlenden Kommunikation zwischen den Netzwerkteilnehmern eine zeitsynchrone Isolierung einer Fehlstelle häufig nur bedingt möglich. Ferner steigt die Zeit für eine Rekonfiguration der Busverbindung im Fehlerfalle mit zunehmender Anzahl der Netzwerkteilnehmer durch erhöhte Synchronisationszeit deutlich an.

Der Erfindung liegt die Aufgabe zugrunde, ein Rechnernetzwerk anzugeben, welches im regulären Betrieb eine Strang-Topologie aufweist und bei dem eine Rekonfiguration des Netzwerkes, insbesondere nach dem Auftreten eines Fehlers in der Busverbindung, gegenüber vergleichbaren Rechnernetzwerken verbessert wird. Außerdem soll ein Knoten, der mit Hilfe seiner Busanschlusslogik mit dem erfindungsgemäßen Rechnernetzwerk verbindbar ist und ein bevorzugtes Verfahren zum Betrieb des Rechnernetzwerkes anhand der im Knoten enthaltenen Kontrolllogik offenbart werden.

Diese Aufgabe wird erfindungsgemäß hinsichtlich des Rechnernetzwerkes durch die Merkmale des Anspruchs 1, und hinsichtlich des Verfahrens durch die Merkmale des Anspruchs 6 gelöst.

Vorteilhafte Ausführungen sind den Unteransprüchen entnehmbar.

Die Erfindung beruht im Wesentlichen auf dem Gedanken, das Rechnernetzwerk im regulären Betrieb mit einer Busverbindung zu betreiben, die eine ringförmige Strang-Topologie aufweist, wobei die Busverbindung nach einem dynamischen Auswahlverfahren an einer Stelle geöffnet und mittels entsprechender Abschlusswiderstände abgeschlossen wird. Wird bei einem derartigen Netzwerk ein Ausfall oder auch Teilausfall der Kommunikation durch einen der Netzwerkteilnehmer registriert, werden die Bussegmente der Busverbindung vorübergehend zu einem Ring bestehend aus Punkt-zu-Punkt-Verbindungen zusammengeschaltet und das schadhafte Segment bestimmt. Anschließend werden dann die Bussegmente der Busverbindung wieder in eine Strang-Topologie umgeschaltet, bei der die offene Stelle des Ringes auf das schadhafte Bussegment gelegt ist.

Die Strang-Topologie bezeichnet eine lineare Busstruktur, auf die jeder Teilnehmer durch einen eigenen physikalischen Abgriff zugreifen kann. Dabei kann jeder Busteilnehmer mit jedem anderen Busteilnehmer im Broadcastverfahren kommunizieren. Die Weiterleitung von Daten von einem Busteilnehmer zum nächsten, wie es in einer Punkt-zu-Punkt Topologie notwendig wäre, ist nicht erforderlich. Die Formulierung "ringförmige Busverbindung" bezieht sich ausschließlich auf die räumliche Anordnung der Busteilnehmer und die sie verbindenden physikalischen Leitungen. Durch Zusammenführung der beiden Enden des linearen Busses in einer Busanschlusslogik wird formal ein Ring erstellt (virtueller Ring), der aber nicht permanent sondern nur bei Bedarf elektrisch geschlossen wird.

Jede Busanschlusslogik besitzt zwei physikalische Abgriffe auf den Bus, die von einer Kontrolllogik kontrolliert werden. Zwischen den beiden Abgriffen einer Busanschlusslogik befindet sich eine Umschaltlogik, die entweder beide Abgriffe über den Bus galvanisch miteinander verbindet oder durch Auftrennen des Busses zwischen den beiden Abgriffen voneinander trennt. Bei aufgetrenntem Bus werden die entstehenden offenen Enden an jedem Angriff gemäß Busspezifikation elektrisch abgeschlossen.

Mit dieser Anordnung sind je nach Schaltzustand der Umschaltlogiken eines jeden Busteilnehmers verschiedene Konstellationen möglich:
- Alle Umschaltlogiken trennen den Bus auf. Es entsteht zwischen benachbarten Busteilnehmern eine elektrisch abgeschlossenen Punkt-zu-Punkt-Verbindung, die über die einzelnen Busteilnehmern zu einem Ring geschlossen ist. Für den Datenaustausch zwischen den Busteilnehmers des gesamten Netzwerkes wird von jedem Busteilnehmer ein aktives Weiterleiten von Daten geschaffen.
- Alle bis auf eine Umschaltlogik schließen den Bus. Es entsteht eine lineare Busverbindung mit Strang-Topologie. Der Datenaustausch zwischen den Busteilnehmers erfolgt im Broadcastverfahren. Beide Enden des entstandenen Busse werden innerhalb der Busteilnehmer, der den Bus auftrennt, elektrische abgeschlossen.
- Alle bis auf zwei benachbarte Umschaltlogiken schließen den Bus. Es entsteht eine lineare Busverbindung mit Strang-Topologie. Der Datenaustausch zwischen den Busteilnehmers erfolgt im Broadcastverfahren. Der elektrische Abschluss des Busses wird durch die zwei Busteilnehmer hergestellt, die den Bus auftrennen. Die direkte physikalische Verbindung zwischen diesen beiden Busteilnehmern wird für den Datenaustausch zwischen allen Busteilnehmern nicht verwendet. Im Fehlerfall ist damit der fehlerbehaftete Busabschnitt ausgeblendet.

Im Unterschied zum VCR (Virtuellen-CAN-Ring) oder anderen bekannten Verfahren basiert die Idee des vorstehenden VRB (Virtueller Ringbus) darauf, dass hier zwischen dem Strangbetrieb und dem Ringbetrieb des Datenbusses dynamisch umgeschaltet werden kann. Die Busanschlusslogik jedes Netzwerkteilnehmers (Knoten) verfügt dabei über zwei unabhängige Busschnittstellen, die über eine Umschaltlogik entweder auf den Strang geschaltet oder einzeln abgeschlossen betrieben werden.

Dieses Verfahren kann durch Verwendung entsprechender, den Netzwerkteilnehmern (Knoten) zugeordneter Kontrolllogiken voll automatisiert werden, sodass innerhalb kurzer Zeit die Datenverbindung zu allen beteiligten Busteilnehmern wieder hergestellt ist. Erfindungsgemäß umfasst die jeweilige Busanschlusslogik zum Anschluss eines Netzwerkteilnehmers an die Busverbindung des Rechnernetzwerkes einen Umschalter, mit dem die Busverbindung unterbrochen werden kann, wobei die offenen Enden der Busverbindung durch Abschlusswiderstände abgeschlossen werden.

Hierzu setzt sich der Umschalter aus zwei seriell in die Busverbindung einfügbare Schalter zusammen, wobei in einer ersten Schaltposition des Umschalters die benachbarten Bussegmente der Busanschlusslogik miteinander verbunden sind und in einer zweiten Schaltposition des Umschalters jeder der beiden Schalter das benachbarte Bussegment, über welches der Busanschlusslogik mit einer benachbarten Busanschlusslogik verbunden ist, mit einem ihr zugeordneten Abschlusswiderstand verbindet. Beiderseits des Umschalters ist jeweils eine separate Busschnittstelle angeordnet, welche die sich an den Umschalter anschließenden Bussegmente mit der Kontrolllogik des zugeordneten Netzwerkteilnehmers verbinden, wobei in der ersten Schaltposition lediglich eine der beiden Busschnittstellen aktiviert werden muss und in der zweiten Schaltposition des Umschalters beide Busschnittstellen aktivierbar sind sowie eine Punkt-zu-Punkt-Verbindung zwischen den mit der Datenverbindung verbundenen benachbarten Netzwerkteilnehmern ermöglichen.

Das erfindungsgemäße Rechnernetzwerk weist u. a. folgende Vorteile auf:
- Die Suche nach einem fehlerhaften Bussegment kann asynchron und parallel erfolgen. Daraus ergibt sich ein Zeitvorteil bei der Rekonfiguration.
- Die Art der Störung auf der Busverbindung, wie z.B. Kurzschlüsse beliebiger Art oder Unterbrechungen, haben keinen Einfluss auf die anzuwendende Strategie bei der Rekonfiguration.
- Anzahl und Position der Netzwerkteilnehmer an der Busverbindung werden dynamisch ermittelt und müssen nicht im Vorwege bekannt sein.
- Nur spezifikationsgerecht abgeschlossene Bussegmente werden für den Transport von Daten benutzt.

Verfahrenstechnisch wird das Rechnernetzwerk zunächst bevorzugt in einer Initialisierungsphase konfiguriert, indem die Kontrolllogiken die über eine entsprechende Ansteuerung ihre zugeordneten Busanschlusslogiken zu einer Punkt-zu-Punkt-Verbindung zusammenschalten und die einzelnen Kontrolllogiken über die jeweils benachbarten Kontrolllogiken die Netzwerkstruktur ermitteln und speichern. Anschließend werden die Punkt-zu-Punkt-Verbindungen aufgehoben. Lediglich die Busverbindung innerhalb eines ersten Knotens wird geöffnet und mittels Abschlusswiderständen abgeschlossen, sodass die Busverbindung eine Strang-Topologie aufweist. Auch eine Konfiguration kann entfallen, wenn von der Wirksamkeit des Rechnernetzwerks ausgegangen wird. Auf jeden Fall wird die Datenkommunikation über diese Busverbindung freigegeben. Sobald ein Ausfall oder Teilausfall der Kommunikation durch eine Kontrolllogik registriert wird, wird das Rechnernetzwerk erneut in seine Initialisierungsphase geschaltet, das schadhafte Bussegment der Busverbindung ermittelt und die offene Stelle der ringförmigen Busverbindung auf das schadhafte Bussegment gelegt. Anschließend wird die Punkt-zu-Punkt-Verbindung aufgehoben und die Strang-Topologie der Busverbindung wieder hergestellt.

Weitere Einzelheiten und Vorteile der Erfindung ergeben sich aus den folgenden, anhand von Figuren erläuterten Ausführungsbeispielen. Es zeigen:
- Fig. 1: die schematische Ansicht eines Knotens mit einem durch gestrichelte Linien an-gedeuteten Kontrolllogik und Busanschlusslogik eines erfindungsgemäßen Rechnernetzwerkes,
- Fig. 2: die schematische Ansicht eines erfindungsgemäßen Rechnernetzwerkes bei der Konfiguration des Netzwerkes,
- Fig. 3: eine Fig. 2 entsprechende Ansicht nach Durchführung der Konfiguration bei dem regulären Betrieb des Netzwerkes,
- Fig. 4: eine Fig. 3 entsprechende Ansicht nach Behebung einer Busstörung.

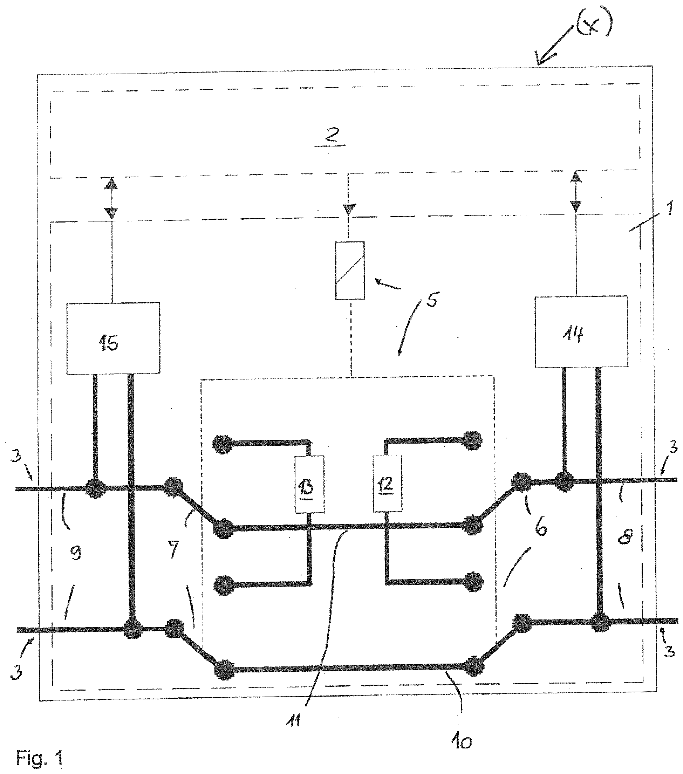

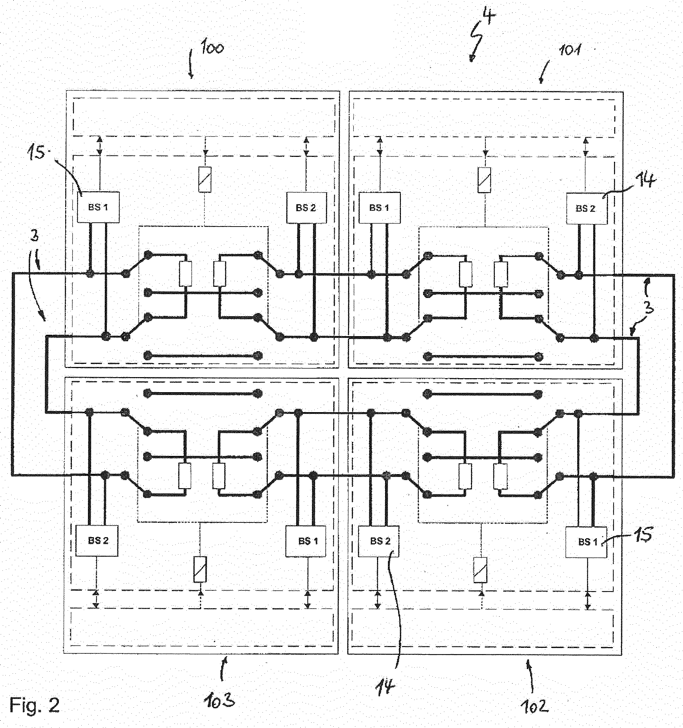

In Fig. 1 ist mit (x) ein Knoten durch gestrichelte Linien angedeuteten Kontrolllogik (2) und einer Busanschlusslogik (1) zum Anschluss an den Datenbus (Busverbindung) 3 eines in den Fig. 2-4 schematisch dargestellten Rechnernetzwerkes 4 bezeichnet.
Die Busanschlusslogik 1 umfasst einen durch die Kontrolllogik 2 ansteuerbaren elektronischen Umschalter 5. Dieser setzt sich aus zwei seriell in die Busverbindung 3 eingefügte Schalter 6 und 7 zusammen. In der in Fig. 1 dargestellten ersten Schaltposition des Umschalters 5 verbinden die beiden Schalter 6, 7 die beiden benachbarten Bussegmente 8, 9 der Busanschlusslogik 1 über entsprechende Leitungsabschnitte 10, 11 miteinander, sodass die Busverbindung 3 geschlossen ist.

In der zweiten Schaltposition des Umschalters 5 wird die Busverbindung 3 durch die beiden Schalter 6, 7 geöffnet und jeder der beiden Schalter 6, 7 verbindet dabei ein offenes Ende des ihm benachbarten Bussegmentes 8, 9 mit einem Abschlusswiderstand 12, 13.

Die Busanschlusslogik 1 umfasst ferner beiderseits des Umschalters 5 jeweils eine separate Busschnittstelle 14, 15, welche die sich an den Umschalter 5 anschließenden Bussegmente 8, 9 mit der dieser Busanschlusslogik 1 zugeordneten Kontrolllogik 2 verbindet.

Nachfolgend wird das Verfahren zum Betrieb eines erfindungsgemäßen Rechnernetzwerkes 4 mit Hilfe der Fig. 2-4 näher beschrieben. Dabei möge das Rechnernetzwerk 4 vier Netzwerkteilnehmer (100-103) umfassen, die über entsprechende Busanschlusslogiken mit der Busverbindung 3 verbunden sind. Die Knoten 100-103 weisen jeweils den gleichen schaltungsgemäßen Aufbau auf, wie der in Fig. 1 beschriebene Knoten.

Nach dem Einschalten einer nicht dargestellten Stromversorgung der Netzwerkteilnehmer wird zunächst das Rechnernetzwerk 4 in einer Initialisierungsphase in drei Schritten konfiguriert.

In einem ersten Schritt werden die Umschalter 5 der Busanschlusslogiken der Knoten 100-103 durch die zugehörigen Kontrolllogiken automatisch in ihre zweite Schaltposition geschaltet. Somit entsteht eine Ring-Topologie aus lauter Punkt-zu-Punkt-Verbindungen zwischen den einzelnen Netzwerkteilnehmern (Fig. 2), wobei die Netzwerkteilnehmer über beide Busschnittstellen 14, 15 mit dem entsprechenden Netzwerkteilnehmer verbunden sind. Dadurch kann jeder Netzwerkteilnehmer seinen linken und rechten Nachbarknoten eindeutig identifizieren.

Die Kommunikation über das gesamte Rechnernetzwerk 4 wird sichergestellt, indem jeder Netzwerkteilnehmer wie ein bidirektionaler Router arbeitet. Auf diese Weise stehen jedem Netzwerkteilnehmer die Informationen der anderen Netzwerkteilnehmer zur Verfügung. Auf Basis dieser Informationen kann jeder Netzwerkteilnehmer automatisch ermitteln, ob es sich bei der Topologie des Netzwerkes um eine Strang- oder Ringstruktur handelt und an welcher relativen Position sich jeder andere Knoten 100-103 befindet.

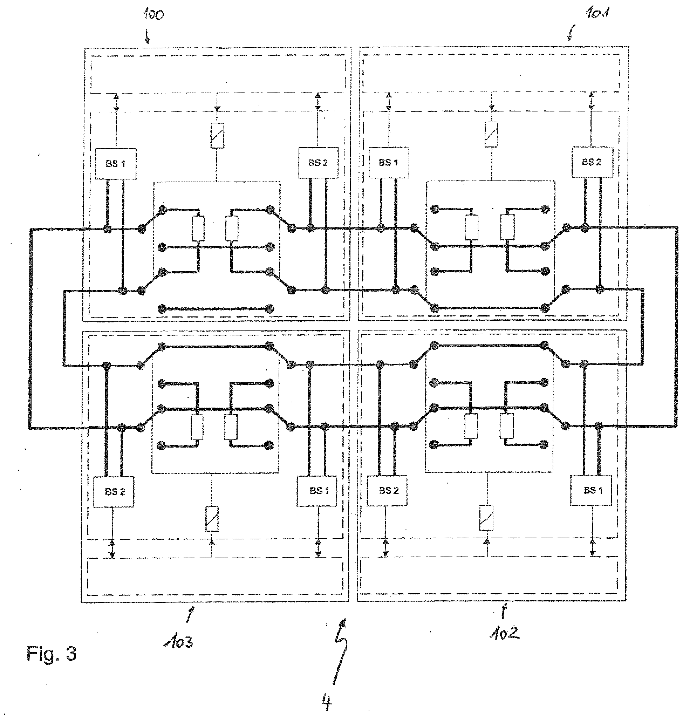

In einem zweiten Schritt übernimmt einer der Netzwerkteilnehmer dynamisch eine Masterfunktion. In Abhängigkeit von der ausgebildeten Struktur der Busverbindung 3 werden die Kontrolllogiken einzelner Netzwerkteilnehmer (100-103) in Fig. 3 angewiesen, den Umschalter 5 ihrer Busanschlusslogik von der zweiten in die erste Schaltungsposition umzuschalten, sodass benachbarte Bussegmente direkt miteinander verbunden werden. Die Router-Funktion dieser Knoten 101-103 wird damit aufgehoben. Die Datenverbindung zwischen den entsprechenden Netzwerkteilnehmern und der Busverbindung erfolgt in diesem Fall nur über eine aktive Busschnittstelle (beispielsweise die Busschnittstelle 14).

Am Ende der Initialisierungsphase verbleibt genau ein Netzwerkteilnehmer 100 in Fig. 3 im Ausgangszustand, bei dem sich also der Umschalter 5 der zugehörigen Busanschlusslogik in seiner zweiten Schaltposition befindet und nur eine Busschnittstelle 14 oder 15 aktiv bleibt. Alle anderen Netzwerkteilnehmer wurden von dem elektronischen Umschalter in den Strangbetrieb umgeschaltet, wobei die Busverbindung 3 über die Abschlusswiderstände 12 und 13 des Knotens 100 abgeschlossen wird.

Im dritten Schritt wird dann die Datenkommunikation über die derart entstandene Busverbindung 3 freigegeben.

Im laufenden Betrieb überwacht jeder Netzwerkteilnehmer die Kommunikation auf der Busverbindung 3. Nimmt einer der bekannten Netzwerkteilnehmer nicht mehr an der Kommunikation teil oder meldet sich ein neuer Netzwerkteilnehmer an, wird eine Rekonfiguration des Rechnernetzwerkes 4 initiiert und somit die neue Konfiguration des Netzwerkes 4 ermittelt, wie dieses vorstehend in den Schritten eins bis drei beschrieben wurde.

Wird eine Rekonfiguration aufgrund einer Störung der Kommunikationsstrecke erforderlich, kann die Ringkonfiguration nicht mehr hergestellt werden. In diesem Fall wird eine Strang-topologie geschaltet, die das beschädigte Bussegment ausgliedert. Dadurch sind wieder alle Busteilnehmer miteinander verbunden. Der Busabschluss wird in diesem Fall durch zwei unterschiedliche Knoten hergestellt.

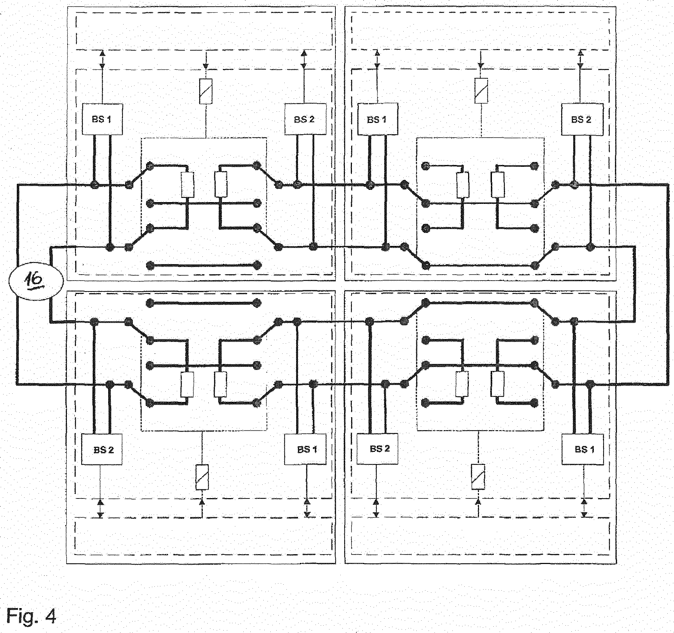

Im Fehlerfall, z.B. bei einer Unterbrechung des Bussegmentes 16 (Fig. 4), sorgt die Kontrolllogik der Netzwerkteilnehmer dafür, dass die Umschalter 5 der Knoten 100-103 die zweite Schaltposition einnehmen. In der folgenden Rekonfigurationsphase wird nach einem festgelegten Verfahren ermittelt, welcher der Netzwerkteilnehmer im Ausgangszustand verbleiben muss, um die Fehlerstelle zu isolieren. Dieses sind bei dem in Fig. 4 dargestellten Ausführungsbeispiel die Knoten 100 und 103. Die den Knoten 101 und 102 zugeordneten Kontrolllogiken schalten über den elektronischen Umschalter 5 ihres Knotens wieder in den Strangbetrieb um. Am Ende der Rekonfigurationsphase besteht dann wieder eine Busverbindung 3 mit reiner Strangtopologie. Dabei ist die Busverbindung über den Abschlusswiderstand 12 des Knotens 100 und den Abschlusswiderstand 13 des Knotens 103 abgeschlossen.

Damit die Busverbindung in jeder Situation vorhersagbar reagieren kann, sind verschiedene Voraussetzungen erforderlich, die nachfolgend definiert werden:
- Die Ruheposition des Umschalters (erste Schaltposition des Umschalters) muss derart gewählt werden, dass die Busverbindung verbunden bleibt bzw. verbunden wird, wenn der betreffende Netzwerkteilnehmer spannungsfrei ist.
- Jeder Netzwerkteilnehmer muss über eine eindeutige Identifikation an der Busverbindung verfügen.
- Im Router-Betrieb muss jeder Netzwerkteilnehmer sicherstellen, dass Daten, die auf der einen Busschnittstelle gesendet werden, beim Empfang dieser auf der anderen Busschnittstelle nicht weitergeroutet werden.
- Im Strangbetrieb ist immer nur eine Busschnittstelle eines Knotens aktiv.

### Bezugszeichenliste

- 1: Busanschlusslogik
- 2: Kontrolllogik
- 3: Busverbindung, Datenbus
- 4: Rechnernetzwerk, Netzwerk
- 5: Umschalter
- 6, 7: Schalter
- 8, 9: Bussegmente
- 10, 11: Leitungsabschnitte
- 12, 13: Abschlusswiderstände
- 14, 15: Busschnittstellen
- 16: Bussegment

- 100-103: Knoten/Netzwerkteilnehmer

## Patentansprüche

1. Rechnernetzwerk (4) mit einer ringförmigen Busverbindung (3), wobei die Busverbindung (3) eine Strang-Topologie aufweist, **dadurch gekennzeichnet, dass** im regulären Betrieb ein Bussegment der Busverbindung (3) offen bleibt und die beiden Enden der Busverbindung (3) mit Abschlusswiderständen (12, 13) abgeschlossen sind, dass Busanschlusslogiken (1) in Kombination mit einer jeweils zugehörigen Kontrolllogik (2) des Rechnernetzwerkes (4) jeweils derart aufgebaut sind, dass bei Registrierung des Ausfalls der Kommunikation durch eine Kontrolllogik (2) die Busverbindung (3) zu einer Ring-Topologie aus Punkt-zu-Punkt-Verbindungen zusammengeschaltet wird, und dass nach Ermittlung des schadhaften Bussegmentes (16) die reguläre Busverbindung (3) wieder hergestellt wird, wobei die Busverbindung (3) im Bereich des schadhaften Bussegmentes (16) offen bleibt, wobei die Busanschlusslogiken (1) jeweils einen Umschalter (5) mit zwei Abschlusswiderständen (12, 13) beinhalten.

2. Rechnernetzwerk nach Anspruch 1, **dadurch gekennzeichnet, dass** bei dessen regulären Betrieb die einzelnen Netzwerkteilnehmer (100-103) jeweils über die Busanschlusslogik (1) mit der ringförmigen Busverbindung (3) verbunden sind.

3. Busanschlusslogik, welche an die Busverbindung (3) des Rechnernetzwerkes (4) nach einem der Ansprüche 1 oder 2 angeschlossen ist, mit den Merkmalen:
a) die jeweilige Busanschlusslogik (1) eines Netzwerkteilnehmers beinhaltet einen Umschalter (5), mit dem die Busverbindung (3) unterbrechbar ist,
b) der Umschalter (5) weist zwei seriell in die Busverbindung einfügbare Schalter (6, 7) auf, wobei in einer ersten Schaltposition des Umschalters (5) die Schalter (6, 7) die benachbarten Bussegmente der Busanschlusslogik (1) miteinander verbindet und wobei in einer zweiten Schaltposition des Umschalters (5) jeder der beiden Schalter (6, 7) das benachbarte Bussegment mit einem ihm zugeordneten Abschlusswiderstand (12, 13) verbindet,
c) die Busanschlusslogik (1) beinhaltet beiderseits des Umschalters (5) jeweils eine separate Busschnittstelle (14, 15).

4. Busanschlusslogik nach Anspruch 3, **dadurch gekennzeichnet, dass** die Busanschlusslogik (1) die sich an den Umschalter (5) anschließenden Bussegmente (8, 9) mit der dieser Busanschlusslogik (1) zugeordneten Kontrolllogik (2) verbindet.

5. Busanschlusslogik nach Anspruch 3 oder 4, **dadurch gekennzeichnet, dass** in der ersten Schaltposition des Umschalters (5) lediglich eine Busschnittstelle (14, 15) und in der zweiten Schaltposition des Umschalters (5) beide Busschnittstellen (14, 15) aktivierbar sind und eine Punkt-zu-Punkt-Verbindung zwischen den mit der Busverbindung (3) verbundenen benachbarten Netzwerkteilnehmern (100-103) durchführbar ist.

6. Verfahren zum Betrieb des Rechnernetzwerkes (4) nach einem der Ansprüche 1 oder 2, mit den Merkmalen:
a) die Datenkommunikation wird über diese Busverbindung (3) freigegeben,
b) sobald ein Ausfall oder Teilausfall der Kommunikation durch eine Kontrolllogik (2) registriert wird, wird das Rechnernetzwerk (4) erneut in seine Initialisierungsphase geschaltet, das schadhafte Bussegment (16) der Busverbindung (3) ermittelt und die offene Stelle der ringförmigen Busverbindung (3) auf das schadhafte Bussegment (16) gelegt,
c) anschließend wird die Punkt-zu-Punkt-Verbindung aufgehoben und die Strang-Topologie der Busverbindung (3) wieder hergestellt.

7. Verfahren nach Anspruch 6, **dadurch gekennzeichnet, dass** das Rechnernetzwerk (4) in einer Initialisierungsphase konfiguriert wird, indem die Kontrolllogiken (2) die über eine entsprechende Ansteuerung ihre zugeordneten Busanschlusslogiken (1) zu einer Punkt-zu-Punkt-Verbindung zusammenschalten und die einzelnen Kontrolllogiken (2) über die jeweils benachbarten Kontrolllogiken (2) und / oder über die Netzwerkstruktur ermitteln und speichern.

8. Verfahren nach Anspruch 6 oder 7, **dadurch gekennzeichnet, dass** die Punkt-zu-Punkt-Verbindungen aufgehoben werden, wobei lediglich die Busverbindung (3) innerhalb eines ersten Knotens (100) geöffnet und mittels Abschlusswiderständen (12, 13) abgeschlossen wird, sodass die Busverbindung (3) eine Strang-Topologie aufweist.

## Claims

1. Computer network (4) having an annular bus connection (3), wherein the bus connection (3) has a thread topology, **characterized in that**, during normal operation, a bus segment of the bus connection (3) remains open and the two ends of the bus connection (3) are terminated with terminating resistors (12, 13), **in that** bus connection logic units (1), in combination with a respectively associated control logic unit (2) of the computer network (4), are each constructed in such a manner that, when the failure of communication is registered by a control logic unit (2), the bus connection (3) is interconnected to form a ring topology of point-to-point connections, and, after determining the defective bus segment (16), the normal bus connection (3) is restored, wherein the bus connection (3) remains open in the region of the defective bus segment (16), wherein the bus connection logic units (1) each contain a changeover switch (5) with two terminating resistors (12, 13).

2. Computer network according to Claim 1, **characterized in that**, during its normal operation, the individual network subscribers (100-103) are each connected to the annular bus connection (3) via the bus connection logic unit (1).

3. Bus connection logic unit which is connected to the bus connection (3) of the computer network (4) according to either of Claims 1 and 2, having the features:
a) the respective bus connection logic unit (1) of a network subscriber contains a changeover switch (5) which can be used to interrupt the bus connection (3),
b) the changeover switch (5) has two switches (6, 7) which can be inserted in series into the bus connection, wherein, in a first switching position of the changeover switch (5), the switches (6, 7) connect the adjacent bus segments of the bus connection logic unit (1) to one another, and wherein, in a second switching position of the changeover switch (5), each of the two switches (6, 7) connects the adjacent bus segment to a terminating resistor (12, 13) assigned to it,
c) the bus connection logic unit (1) respectively contains a separate bus interface (14, 15) on both sides of the changeover switch (5).

4. Bus connection logic unit according to Claim 3, **characterized in that** the bus connection logic unit (1) connects the bus segments (8, 9) adjoining the changeover switch (5) to the control logic unit (2) assigned to this bus connection logic unit (1).

5. Bus connection logic unit according to Claim 3 or 4, **characterized in that**, in the first switching position of the changeover switch (5), only one bus interface (14, 15) can be activated and, in the second switching position of the changeover switch (5), both bus interfaces (14, 15) can be activated and a point-to-point connection can be implemented between the adjacent network subscribers (100-103) connected to the bus connection (3).

6. Method for operating the computer network (4) according to either of Claims 1 and 2, having the features:
a) data communication is enabled via this bus connection (3),
b) as soon as failure or partial failure of communication is registered by a control logic unit (2), the computer network (4) is switched to its initialization phase again, the defective bus segment (16) of the bus connection (3) is determined and the open location of the annular bus connection (3) is placed at the defective bus segment (16),
c) the point-to-point connection is then removed and the thread topology of the bus connection (3) is restored.

7. Method according to Claim 6, **characterized in that** the computer network (4) is configured in an initialization phase by virtue of the control logic units (2) interconnecting their assigned bus connection logic units (1) by means of appropriate control to form a point-to-point connection and determining and storing the individual control logic units (2) via the respectively adjacent control logic units (2) and/or via the network structure.

8. Method according to Claim 6 or 7, **characterized in that** the point-to-point connections are removed, wherein only the bus connection (3) inside a first node (100) is opened and is terminated by means of terminating resistors (12, 13), with the result that the bus connection (3) has a thread topology.

## Revendications

1. Réseau informatique (4) doté d'une liaison de bus en anneau (3), la liaison de bus (3) présentant une topologie linéaire, **caractérisé en ce qu'**au cours du fonctionnement normal, un segment de bus de la liaison de bus (3) reste ouvert et les deux extrémités de la liaison de bus (3) sont terminées par des résistances de terminaison (12, 13), **en ce que** des logiques de connexion de bus (1) en combinaison avec une logique de contrôle (2) respectivement associée du réseau informatique (4) sont conçues respectivement de telle sorte que si une panne de la communication est enregistrée par une logique de contrôle (2), la liaison de bus (3) est interconnectée en une topologie en anneau composée de liaisons point à point, et **en ce qu'**après la détermination du segment de bus défectueux (16), la liaison de bus normale (3) est rétablie, la liaison de bus (3) restant ouverte au niveau du segment de bus défectueux (16), les logiques de connexion de bus (1) comprenant respectivement un inverseur (5) doté de deux résistances de terminaison (12, 13).

2. Réseau informatique selon la revendication 1, **caractérisé en ce qu'**au cours du fonctionnement normal de celui-ci, les participants au réseau individuels (100 à 103) sont reliés à la liaison de bus en anneau (3) par la logique de connexion de bus (1), respectivement.

3. Logique de connexion de bus qui est connectée à la liaison de bus (3) du réseau informatique (4) selon l'une quelconque des revendications 1 ou 2, ayant les particularités suivantes :
a) la logique de connexion de bus (1) respective d'un participant au réseau comprend un inverseur (5) qui permet d'interrompre la liaison de bus (3),
b) l'inverseur (5) présente deux commutateurs (6, 7) pouvant être insérés en série dans la liaison de bus, dans lequel, dans une première position de commutation de l'inverseur (5), les commutateurs (6, 7) relient les uns aux autres les segments de bus voisins de la logique de connexion de bus (1), et dans lequel, dans une deuxième position de commutation de l'inverseur (5), chacun des deux commutateurs (6, 7) relie le segment de bus voisin à une résistance de terminaison (12, 13) qui lui est associée,
c) la logique de connexion de bus (1) comprend une interface de bus séparée (14, 15) respectivement des deux côtés de l'inverseur (5).

4. Logique de connexion de bus selon la revendication 3, **caractérisé en ce que** la logique de connexion de bus (1) relie les segments de bus (8, 9) se connectant à l'inverseur (5) à la logique de contrôle (2) associée à cette logique de connexion de bus (1).

5. Logique de connexion de bus selon la revendication 3 ou 4, **caractérisé en ce que** dans la première position de commutation du inverseur (5), seule une interface de bus (14, 15) peut être activée, et dans la deuxième position de commutation de l'inverseur (5), les deux interfaces de bus (14, 15) peuvent être activées, et une liaison point à point peut être effectuée entre les participants au réseau voisins (100 à 103) reliés à la liaison de bus (3).

6. Procédé d'exploitation d'un réseau informatique (4) selon l'une quelconque des revendications 1 ou 2, ayant les particularités suivantes :
a) la communication de données est libérée par cette liaison de bus (3),
b) dès qu'une panne ou une panne partielle de la communication est enregistrée par une logique de contrôle (2), le réseau informatique (4) est à nouveau commuté sur sa phase d'initialisation, le segment de bus défectueux (16) de la liaison de bus (3) est déterminé, et l'emplacement ouvert de la liaison de bus en anneau (3) est appliqué au segment défectueux (16),
c) ensuite, la liaison point à point est supprimée et la topologie linéaire de la liaison de bus (3) est rétablie.

7. Procédé selon la revendication 6, **caractérisé en ce que** le réseau informatique (4) est configuré dans une phase d'initialisation **en ce que** les logiques de contrôle (2) interconnectent par un pilotage adéquat leurs logiques de connexion de bus (1) associées en une liaison point à point, et déterminent et stockent les logiques de contrôle individuelles (2) par les logiques de contrôle respectivement voisines (2) et/ou par la structure de réseau.

8. Procédé selon la revendication 6 ou 7, **caractérisé en ce que** les liaisons point à point sont supprimées, seule la liaison de bus (3) à l'intérieur d'un premier nœud (100) étant ouverte et terminée au moins de résistances de terminaison (12, 13) de sorte que la liaison de bus (3) présente une topologie linéaire.
